# EUROPÄISCHE PATENTANMELDUNG

(11) **EP 2 420 757 A2**
(43) Veröffentlichungstag der Anmeldung: **22.02.2012**
(21) Anmeldenummer: 11006726.1
(22) Anmeldetag: 17.08.2011
(51) Int. Cl.: F24J 2/46, B08B 1/00

(54) **Reinigungsvorrichtung**

(30) Priorität: 19.08.2010 DE 102010034834; 04.03.2011 DE 102011013031
(71) Anmelder: Jäger, Anton, 89250 Senden (DE)
(72) Erfinder: Jäger, Anton, 89250 Senden (DE)
(74) Vertreter: Manitz, Finsterwald & Partner GbR

(57) **Zusammenfassung**

Die Erfindung betrifft eine Vorrichtung zum Reinigen von insbesondere geneigten Flächen, insbesondere von Solar- oder Photovoltaikanlagenflächen auf Dächern von Gebäuden, mit einer Basis, an der wenigstens eine Reinigungseinrichtung angebracht ist, und mit einem Selbstlaufantrieb für die Basis, wobei der Selbstlaufantrieb eine Mehrzahl von jeweils wahlweise aktiv oder passiv schaltbaren Saugnapfeinrichtungen umfasst.

## Beschreibung

Die Erfindung betrifft eine Vorrichtung zum Reinigen von insbesondere geneigten Flächen, insbesondere von Solar- oder Photovoltaikanlagenflächen auf Dächern von Gebäuden.

Derartige Flächen werden typischerweise entweder mit Handbürsten oder maschinell z.B. mit rotierenden Bürsten gereinigt. Um die gesamte Fläche reinigen zu können, muss die Reinigungsvorrichtung auf der Fläche bewegt werden. Dies kann beispielsweise von Hand erfolgen, was sich aber vor allem dann als zumindest schwierig, wenn nicht sogar praktisch undurchführbar erweist, wenn es sich bei den zu reinigenden Flächen um solche auf geneigten Gebäudedächern handelt, was bei Solar- oder Photovoltaikanlagenflächen regelmäßig der Fall ist.

In manchen Fällen ist es grundsätzlich möglich, die Reinigungsvorrichtung vom Boden aus beispielsweise über eine lange Stange zu halten und zu bewegen. Für die meisten Anwendungen wird allerdings eine sich selbständig bewegende Reinigungsvorrichtung angestrebt. Hierzu ist es beispielsweise möglich, im Bereich der Solar- bzw. Photovoltaikanlage eine Führungs- und Halteeinrichtung für die Reinigungsvorrichtung vorzusehen. Diese Einrichtung kann beispielsweise eine Schienen- oder Stangenführung beinhalten, längs welcher die Reinigungsvorrichtung sich automatisch bzw. selbständig bewegt. Eine derartige automatische Reinigung von Solar- bzw. Photovoltaikanlagenflächen ist aber relativ aufwendig, zumal in den meisten Fällen auf diese Weise nur eine "zeilenweise" Reinigung möglich ist, d.h. die Reinigungsvorrichtung sich nicht frei über die gesamte zu reinigende Fläche bewegen kann.

Aufgabe der Erfindung ist es, eine Möglichkeit zur Reinigung von Flächen der eingangs genannten Art zu schaffen, insbesondere von Solar- oder Photovoltaikanlagenflächen auf Dächern von Gebäuden, wobei ein flexibles, automatisches Reinigen der Flächen auf zuverlässige Weise und bei möglichst geringen Kosten gegeben sein soll.

Die Lösung dieser Aufgabe erfolgt durch die Merkmale des Anspruchs 1.

Erfindungsgemäß umfasst die Vorrichtung eine Basis, an der wenigstens eine Reinigungseinrichtung angebracht ist, sowie einen Selbstlaufantrieb für die Basis, wobei der Selbstlaufantrieb eine Mehrzahl von jeweils wahlweise aktiv oder passiv schaltbaren Saugnapfeinrichtungen umfasst.

Die erfindungsgemäße Reinigungsvorrichtung ist mit einem Selbstlaufantrieb versehen und daher in der Lage, sich selbsttätig und somit frei über die zu reinigende Fläche zu bewegen. Der erfindungsgemäße Saugnapfantrieb für die Reinigungsvorrichtung hat den Vorteil, dass es die zu reinigende Fläche selbst ist, die zum Halten der Reinigungsvorrichtung genutzt werden kann. Bei geneigten Flächen von Solar- oder Photovoltaikanlagen muss sichergestellt werden, dass die Reinigungsvorrichtung auf der geneigten Fläche ausreichend Halt finden sowie die Neigung überwinden kann. Diese Anforderungen lassen sich mit Saugnäpfen erfüllen. Es wurde überraschend gefunden, dass bei vertretbaren Kosten ein Saugnapfantrieb auch auf einer wegen des Reinigungsbetriebs nassen und gegebenenfalls sogar aufgrund von Reinigungszusätzen eigentlich sehr "rutschigen" geneigten glatten Fläche einen ausreichenden Halt für die Reinigungsvorrichtung gewährleisten kann.

Indem die Saugnapfeinrichtungen jeweils wahlweise aktiv und passiv geschaltet werden können, kann bei entsprechender Ausbildung des Selbstlaufantriebs durch eine entsprechende Steuerung ein Bewegungsablauf für die Reinigungsvorrichtung realisiert werden, bei dem wenigstens eine momentan aktiv geschaltete Saugnapfeinrichtung für den erforderlichen Halt auf der zu reinigenden Fläche sorgt, während wenigstens eine momentan passiv geschaltete Saugnapfeinrichtung eine wie auch immer geartete Umsetzbewegung relativ zur Halt gebenden aktiven Saugnapfeinrichtung ausführt, um dann gemäß dem jeweiligen Bewegungsablauf ihrerseits die Haltefunktionen zu übernehmen.

Die erfindungsgemäße Reinigungsvorrichtung ist problemlos dazu in der Lage, Hindernisse zu überwinden, wie sie insbesondere in Form von Trennstegen zwischen einzelnen Feldern von Solar- bzw. Photovoltaikanlagen vorhanden sind. Eine Beschränkung auf lediglich eine zeilenweise Reinigung von Flächen ist somit nicht gegeben.

Bevorzugte Ausführungsformen der Erfindung sind auch in den abhängigen Ansprüchen, der Beschreibung sowie der Zeichnung angegeben.

Insbesondere ist der Selbstlaufantrieb derart ausgebildet, dass eine Laufbewegung der Basis eine Drehbewegung um wenigstens eine im Aktivzustand befindliche Saugnapfeinrichtung umfasst. Die Fortbewegung wird hierbei so realisiert, dass das Umsetzen eine Drehbewegung der momentan passiv geschalteten Saugnapfeinrichtung umfasst.

Die Basis kann mit wenigstens einem, insbesondere tellerartigen, Träger versehen sein, der wiederum mit den Saugnapfeinrichtungen versehen ist und an dem die Basis drehbar gelagert ist. Der Teller kann in geeigneter Weise um die jeweils aktiv geschaltete Saugnapfeinrichtung unter Mitnahme der passiv geschalteten Saugnapfeinrichtungen gedreht werden, wobei die Basis mitgenommen wird. Die drehbare Lagerung zwischen Basis und Träger gewährleistet die korrekte Ausrichtung der Basis und somit der an der Basis angebrachten Reinigungseinrichtung während der Fortbewegung.

In einer Ausführungsform der Erfindung ist eine Mehrzahl von jeweils mit Saugnapfeinrichtungen versehenen Trägern vorgesehen, wobei insbesondere wenigstens zwei Träger vorgesehen sind, die jeweils wenigstens zwei wahlweise aktiv oder passiv schaltbare Saugnapfeinrichtungen umfassen. Bevorzugt sind die Träger für eine Laufbewegung der Basis synchron betreibbar.

Wenn mehr als zwei Träger bzw. mehr als zwei Saugnapfeinrichtungen pro Träger vorgesehen sind, dann ist es bevorzugt, wenn die Träger und/oder an jedem Träger die Saugnapfeinrichtungen in einer regelmäßigen Anordnung, insbesondere in Form einer Matrix, vorgesehen sind.

Ein derartiger "Selbstläufer" kann sich in besonders vorteilhafter Weise fortbewegen und insbesondere ausgehend von einer Startposition jede beliebige Richtung einschlagen, wobei es dieses Konzept bei entsprechender konkreter Auslegung auch ermöglicht, dass die Vorrichtung sich auf der Stelle dreht, was in manchen Anwendungen von Vorteil sein kann.

Gemäß einem weiteren Ausführungsbeispiel der Erfindung sind die Saugnapfeinrichtungen jeweils am Träger drehbar gelagert. Hierdurch kann für das Umsetzen der Reinigungsvorrichtung, gewissermaßen also zum Ausführen eines "Schrittes", der Träger um die jeweils aktiv geschaltete Saugnapfeinrichtung herum gedreht werden.

Gemäß einer Ausführungsform ist vorgesehen, dass die Basis zentral und die Saugnapfeinrichtungen jeweils exzentrisch am Träger drehbar gelagert sind. Die exzentrische Lagerung der Saugnapfeinrichtungen am Träger sorgt hier dafür, dass beim Umsetzen, also bei einer Drehbewegung des Trägers um die jeweils aktive Saugnapfeinrichtung, eine resultierende Bewegung in einer gewünschten Fortbewegungsrichtung erfolgt, wohingegen die zentrale Lagerung der Basis am Träger für die Auslegung des Selbstlaufantriebs besonders vorteilhaft ist.

Gemäß einem Ausführungsbeispiel der Erfindung umfasst der Selbstlaufantrieb eine Antriebssteuerung, mit der zumindest eine Antriebseinheit, die einen Träger und wenigstens eine am Träger angebrachte Saugnapfeinrichtung umfasst, gemäß einem zyklischen Bewegungsablauf ansteuerbar ist, wobei jeder Zyklus die Schritte umfasst, dass wenigstens eine zuvor passive Saugnapfeinrichtung aktiv und jede andere Saugnapfeinrichtung passiv geschaltet wird, und dass der Träger über einen vorgegebenen Winkelbereich um die aktiv geschaltete Saugnapfeinrichtung herum gedreht wird. Der Zyklus beginnt dann wieder von vorne, d.h. es wird eine andere Saugnapfeinrichtung aktiv geschaltet.

Die Basis kann eine Mehrzahl von jeweils mit Saugnapfeinrichtungen versehenen Trägern aufweisen, die für eine Laufbewegung der Basis synchron betreibbar sind.

Insbesondere ist der Selbstlaufantrieb derart betreibbar, dass jeder Zyklus eines zyklischen Bewegungsablaufes einen Zustand umfasst, in welchem wenigstens zwei unterschiedlichen Trägern zugeordnete Saugnapfeinrichtungen gleichzeitig aktiv geschaltet sind, wobei die Träger jeweils relativ zur Basis und zu den gleichzeitig aktiv geschalteten Saugnapfeinrichtungen verdrehbar sind und die Basis relativ zu einer gedachten Verbindung zwischen den gleichzeitig aktiv geschalteten Saugnapfeinrichtungen unverdrehbar ist.

In diesem Zustand ist die Basis durch die aktiv geschalteten Saugnapfeinrichtungen in einer festen Orientierung relativ zu der jeweiligen Fläche festgehalten, d.h. diese Orientierung der Basis bleibt unverändert, wenn - beispielsweise durch einen geeignet ausgebildeten Antrieb - die Träger jeweils relativ zur Basis und somit zu den gleichzeitig aktiv geschalteten Saugnapfeinrichtungen verdreht wird. Auf diese Weise wird die Basis samt Reinigungseinrichtung relativ zur Fläche bewegt, wobei die Reinigungsvorrichtung als Ganzes betrachtet durch die aktiv geschalteten Saugnapfeinrichtungen an der Fläche festgehalten wird.

Ein Vorteil dieser Ausgestaltung besteht darin, dass ein Drehantrieb genügt, der zwischen wenigstens einen der Träger und die Basis geschaltet und dazu ausgebildet ist, eine relative Drehung zwischen Träger und Basis zu bewirken. Dabei genügt eine freie Verdrehbarkeit dieses Trägers relativ zu der aktiv geschalteten Saugnapfeinrichtung.

Bevorzugt ist die Reinigungsvorrichtung derart ausgelegt, dass in einem Fortbewegungsmodus eine resultierende Bewegungsrichtung gegeben ist, die geradlinig ist. Folglich ist es erstrebenswert, wenn die Reinigungsvorrichtung dazu in der Lage ist, bei entsprechender Ansteuerung einen Richtungswechsel durchzuführen, insbesondere ein "Abbiegen" nach links oder rechts. Wenigstens ein mit Saugnapfeinrichtungen versehener Träger kann speziell oder zusätzlich dazu ausgebildet und ansteuerbar sein, um eine solche Änderung der Laufrichtung der Reinigungsvorrichtung zu bewirken.

Des Weiteren kann erfindungsgemäß vorgesehen sein, dass der Selbstlaufantrieb zwischen den Saugnapfeinrichtungen und der Basis wenigstens eine, insbesondere elektrisch und/oder pneumatisch betriebene, Antriebseinrichtung zur Erzeugung einer Drehbewegung umfasst. Bevorzugt umfasst diese Antriebseinrichtung wenigstens einen Elektromotor, insbesondere einen Schrittmotor oder einen Servomotor, oder einen Pneumatikzylinder.

Die Antriebseinrichtung sorgt für die erforderlichen Relativbewegungen zwischen den einzelnen Komponenten des Selbstlaufantriebs, beispielsweise für die notwendigen relativen Drehbewegungen. Dabei ist insbesondere vorgesehen, dass zwischen der Basis und jedem Träger und/oder zwischen Träger und jeder Saugnapfeinrichtung eine Antriebseinrichtung zur Erzeugung einer Drehbewegung wirksam ist. Dabei kann jedem Träger bzw. jeder Saugnapfeinrichtung ein eigener Motor bzw. Pneumatikzylinder zugeordnet sein. Grundsätzlich ist es aber auch möglich, einen Antriebsmotor bzw. Pneumatikzylinder für eine Mehrzahl von Trägern bzw. Saugnapfeinrichtungen vorzusehen.

Wie vorstehend bereits angedeutet, ist in einem bevorzugten Ausführungsbeispiel vorgesehen, dass für jeden Träger genau eine Antriebseinrichtung vorgesehen ist, mit welcher bei freier Verdrehbarkeit des Trägers relativ zu einer aktiv geschalteten Saugnapfeinrichtung der Träger und die Basis relativ zueinander verdrehbar sind.

Wenn jeder Träger mit einer derartigen Antriebseinrichtung versehen ist, dann kann bei einer aktiv geschalteten Saugnapfeinrichtung pro Träger durch Aktivieren der Antriebseinrichtungen insgesamt eine Bewegung der Basis erzielt werden, bei welcher sich die Basis mittels der Träger um die aktiv geschalteten Saugnapfeinrichtungen dreht, wobei sich die Orientierung der Basis relativ zu der Fläche, an der die Gesamtvorrichtung mittels der aktiv geschalteten Saugnapfeinrichtungen gehalten wird, nicht verändert, d.h. die Basis selbst sich nicht verdreht. Das System besitzt genau so viele Freiheitsgrade, dass die Basis durch die relativ zu den aktiv geschalteten Saugnapfeinrichtungen verdrehbaren Träger zwangsgeführt ist und somit eine eindeutig definierte Bewegung ausführt.

Dabei ist - wie erwähnt - nur wenigstens ein Drehantrieb zwischen einem der Träger und der Basis erforderlich, wobei bevorzugt ein synchroner Betrieb mehrerer jeweils zwischen einen der Träger und die Basis geschalteter Drehantriebe vorgesehen ist.

In einem weiteren Ausführungsbeispiel ist vorgesehen, dass die Saugnapfeinrichtungen jeweils zwischen einer angehobenen Stellung und einer abgesenkten Stellung bewegbar sind, wobei insbesondere jeweils ein Aktivschalten ein Absenken und Evakuieren und ein Passivschalten ein Belüften und Anheben der jeweiligen Saugnapfeinrichtung umfasst. Eine gemeinsame Antriebssteuerung kann dabei für ein koordiniertes, d.h. zeitlich abgestimmtes Aktivschalten und Passivschalten der Saugnapfeinrichtungen und somit jeweils für ein zeitlich abgestimmtes Absenken und Evakuieren einerseits und Belüften und Anheben andererseits sorgen.

Gemäß einem unabhängigen Aspekt der Erfindung, der auch separat beansprucht wird, ist eine Vorrichtung zum Reinigen von insbesondere geneigten Flächen, insbesondere von Solar- oder Photovoltaikanlagenflächen auf Dächern von Gebäuden, vorgesehen, die eine Basis und einen Selbstlaufantrieb für die Basis umfasst, wobei der Selbstlaufantrieb wenigstens ein Aktivorgan, insbesondere eine Mehrzahl von jeweils wahlweise aktiv oder passiv schaltbaren Saugnapfeinrichtungen, umfasst, und wobei ein Reinigungsorgan über 360° um das Aktivorgan herum angeordnet ist, und/oder wobei der Selbstlaufantrieb derart ausgebildet ist, dass die Basis um 360° um eine kombinierte, antreibbare Reinigungs- und Bewegungseinheit drehbar ist, die ein Reinigungsorgan und das Aktivorgan umfasst.

Auch eine derartige erfindungsgemäße Vorrichtung kann in jeder Situation und insbesondere auch "aus dem Stand" in jede beliebige Richtung bewegt werden, ohne dass die Reinigungswirkung beeinträchtigt wird. Insbesondere hat auch eine derartige erfindungsgemäße Vorrichtung - anders als aus dem Stand der Technik bekannte Einrichtungen - in Bezug auf ihre Bewegung auf der zu reinigenden Fläche keine Basis- oder Vorzugsrichtung, bezüglich welcher die Anbringung, Anordnung oder Ausrichtung eines herkömmlichen Reinigungsorgans abgestimmt werden müsste.

Die Erfindung wird im Folgenden beispielhaft unter Bezugnahme auf die Zeichnung beschrieben. Es zeigen:
- Fig.1: unter anderem schematisch eine Draufsicht auf eine Reinigungsvorrichtung gemäß der Erfindung,
- Fig. 2: ein Ausführungsbeispiel für eine mit Saugnapfeinrichtungen versehene Antriebseinheit einer erfindungsgemäßen Reinigungsvorrichtung,
- Fig. 3: eine Ansicht von unten auf ein Ausführungsbeispiel einer erfindungsgemäßen Reinigungsvorrichtung,
- Fig. 4: eine Ansicht von unten auf ein anderes Ausführungsbeispiel einer erfindungsgemäßen Reinigungsvorrichtung, und

- Fig. 5: eine geschnittene Seitenansicht eines weiteren Ausführungsbeispiels einer erfindungsgemäßen Reinigungsvorrichtung.

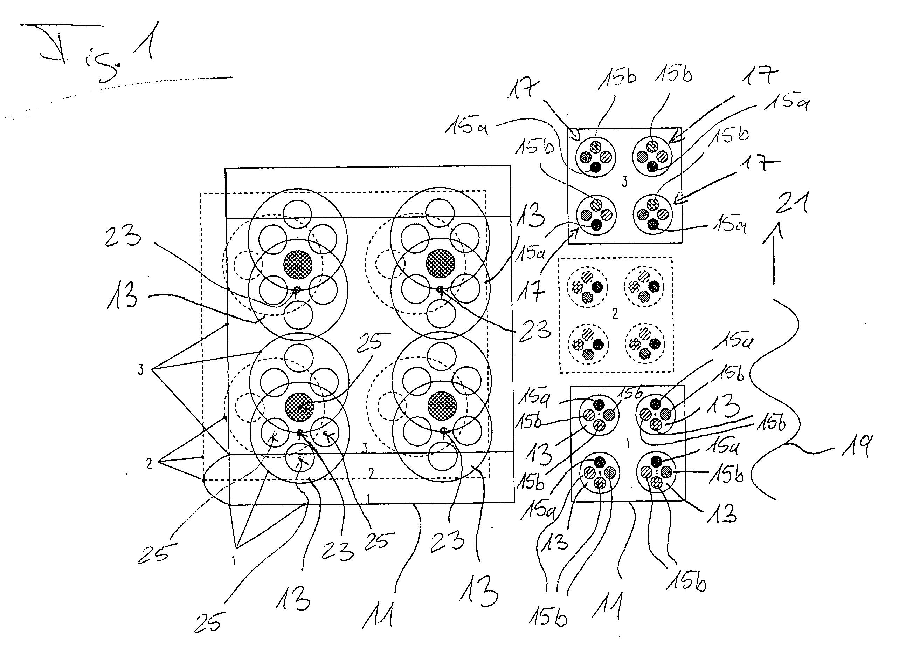

Die Fig. 1 zeigt eine erfindungsgemäße Reinigungsvorrichtung, die eine Basis 11, vier tellerartige Träger 13, die an der Unterseite der Basis 11 angebracht sind, sowie eine Mehrzahl von Saugnapfeinrichtungen 15a, 15b umfasst, von denen jeweils vier an der Unterseite jedes Trägers 13 angebracht sind.

Die Basis 11 und die Träger 13 sind jeweils gegeneinander verdrehbar, und zwar jeweils um eine Achse 23, die durch den Mittelpunkt des Trägers 13 verläuft. Des Weiteren sind an jedem Träger 13 die Saugnapfeinrichtungen 15a, 15b relativ zu dem Träger 13 drehbar.

In der Fig. 1 nicht dargestellt sind diejenigen Einrichtungen, die dazu dienen, die im Folgenden auch einfach als Saugnäpfe bezeichneten Saugnapfeinrichtungen aktiv und passiv zu schalten, d.h. anzuheben oder abzusetzen sowie zu belüften oder zu evakuieren, sowie diejenigen Antriebseinrichtungen, die dazu dienen, die Träger jeweils um einen momentan aktiv geschalteten Saugnapf zu drehen. Unter einem aktiv geschalteten Saugnapf ist hier ein aufgesetzter und evakuierter Saugnapf zu verstehen, der auf diese Weise fest mit der jeweiligen Fläche, auf welcher die Reinigungsvorrichtung aufliegt, verbunden ist. Indem der zuvor evakuierte Saugnapf unter Druck gesetzt (belüftet) wird, erfolgt ein Umschalten des Saugnapfes in einen passiven Zustand, in welchem der Saugnapf angehoben und relativ zur Fläche bewegt werden kann.

Die Saugnäpfe 15a, 15b können also - zusätzlich zum Evakuieren und Unterdrucksetzen - angehoben und abgesenkt werden, wobei diese Funktionen insbesondere unabhängig voneinander gesteuert werden können. Dies ist aber nicht zwingend, d.h. diese Funktionen können auch in vorgegebener Weise miteinander kombiniert werden, so dass z.B. ein Anheben nur nach vorherigem Belüften initiiert werden kann. Zum Herstellen des aktiven Zustands wird der betreffende Saugnapf abgesenkt und evakuiert, während der passive Zustand dadurch hergestellt wird, dass der Saugnapf unter Druck gesetzt und angehoben wird.

Ebenfalls in der Fig. 1 nicht dargestellt ist eine Reinigungseinrichtung, die mit der Basis 11 verbunden ist und eigene Einrichtungen zum Ausführen einer Reinigungsbewegung sowie für die Zufuhr von Reinigungsfluid, insbesondere Wasser, sowie gegebenenfalls eines oder mehrerer Reinigungszusätze aufweist. Die Reinigungseinrichtung kann beispielsweise eine relativ zur Basis 11 rotierende Reinigungsbürste umfassen, die an einer der Seiten der Basis 11 angebracht ist, beispielsweise an der in der Fig. 1 oberen Seite, die im Folgenden auch als Vorderseite bezeichnet wird.

Fig. 1 zeigt die Reinigungsvorrichtung in drei unterschiedlichen Phasen 1, 2 und 3 während eines Zyklus einer Laufbewegung in Vorwärtsrichtung, d.h. in Fig. 1 nach oben. Während die Darstellung links in Fig. 1 die während der einzelnen Phasen zurückgelegten Wege sowie die dabei eingenommenen Positionen der Reinigungsvorrichtung korrekt wiedergibt, ist die mittlere Darstellung, in welcher die Reinigungsvorrichtung jeweils gegenüber der linken Darstellung verkleinert ist, zur besseren Übersichtlichkeit auseinander gezogen dargestellt.

Rechts in Fig. 1 ist eine schlangenlinienförmige Bahn 19 dargestellt, welche zumindest näherungsweise die Bewegung des Schwerpunkts der Reinigungsvorrichtung während der Laufbewegung veranschaulicht. Das Ergebnis dieser Laufbewegung ist - wie bereits erwähnt - eine geradlinige Bewegung in Vorwärtsrichtung, wie sie durch den Pfeil 21 in Fig. 1 angedeutet ist.

Während der Fortbewegung werden die vier Antriebseinheiten 17, die jeweils von einem Träger 13 und den vier am Träger 13 angebrachten Saugnäpfen 15a, 15b gebildet sind, synchron und gleichsinnig angetrieben.

In Phase 1 ist der jeweils vordere Saugnapf 15a aktiv, d.h. die Basis 11 wird auf der zu reinigenden Fläche über die vier vorderen Saugnäpfe 15a gehalten. Durch Ansteuerung eines gemeinsamen Antriebs oder entsprechender individueller Antriebseinrichtungen wird bei durch die aktiven Saugnäpfe 15a gehaltener Basis 11 jeder Träger 13 um seinen aktiv geschalteten Saugnapf 15a verdreht, und zwar um eine Drehachse 25, wobei diese vorgegebene Drehbewegung 180° umfasst, so dass am Ende dieses "Schrittes" der Zustand gemäß Phase 3 gegeben ist.

Die gestrichelte Darstellung zeigt mit Phase 2 einen Zwischenzustand, in welchem die Träger 13 um 90° im Uhrzeigersinn gedreht wurden, wie es durch die Pfeile in der mittleren Darstellung der Phase 2 angedeutet ist. Die Basis 11 und damit die Reinigungsvorrichtung als Ganzes wird hierbei seitlich nach links ausgelenkt, bewegt sich allerdings während des anschließenden zweiten 90°-Abschnitts der Umsetzbewegung zurück auf die ursprüngliche "Spur". Wie bereits erwähnt, ist diese Bewegung der Reinigungsvorrichtung durch die Bahn 19 angedeutet.

Die drehbare Lagerung zwischen der Basis 11 und den Trägern 13 um die Drehachsen 23 sorgt dafür, dass trotz dieser Schlangenlinien-Bewegung die Basis 11 ihre ursprüngliche Orientierung stets beibehält, so dass während dieser Laufbewegung der Reinigungsvorrichtung eine Reinigung der Fläche mittels der an der Vorderseite angebrachten rotierenden Bürste erfolgen kann.

Um ausgehend von dem Zustand in Phase 3 die Laufbewegung in der Richtung 21 fortzusetzen, werden zunächst die vier vorderen, bislang passiven Saugnäpfe 15b aktiv geschaltet, woraufhin die bisher aktiven, in Phase 3 hinteren Saugnäpfe 15a in einen Passivzustand überführt werden können. Die Ausgangssituation gemäß Phase 1 ist dann hergestellt, und der Zyklus kann von neuem beginnen.

Um einen Richtungswechsel durchzuführen, beispielsweise ein "Abbiegen" nach links, können ausgehend von dem Zustand in Phase 2, also nach einem 90°-Abschnitt der Drehbewegung der Träger 13, die vier linken Saugnäpfe in einen aktiven Zustand geschaltet werden, woraufhin sich eine in Fig. 1 nach links gerichtete Fortbewegung mit jeweils 180°-Verdrehabschnitten, wie zuvor erläutert, anschließen kann. Bei einem derartigen Richtungswechsel wird die ursprünglich linke Seite der Basis 11 zur Vorderseite, was ersichtlich ungünstig sein kann, wenn die Reinigungseinrichtung, z.B. eine Bürste, lediglich an einer Seite der Basis11 angebracht ist. In diesem Fall ist es vorteilhaft, die Antriebseinheiten 17 so anzusteuern, dass die Vorrichtung Richtungswechsel derart durchführt, dass stets die gleiche Seite der Basis 11 die in Laufrichtung vordere Seite bildet.

Hierzu könnte z.B. die Basis 11 um nur einen der Träger 13 um z.B. 90° verschwenkt werden, wobei hierzu alle Saugnäpfe des Trägers 13 aktiviert werden können. Ein z.B. ausschließlich für derartige Richtungswechsel vorgesehener Träger könnte im Ausführungsbeispiel der Fig. 1 als fünfter Träger hinzukommen und mittig an der Basis 11 angebracht sein.

Es kann folglich erfindungsgemäß durch wahlweises Überführen der Saugnäpfe in einen Aktivzustand oder einen Passivzustand im Prinzip jede beliebige effektive Reinigungsbahn der Vorrichtung auf der zu reinigenden Fläche "gelaufen" werden, d.h. die erfindungsgemäße Reinigungsvorrichtung ist ein auf der Fläche frei bewegbarer Reinigungsroboter, dessen Steuerung durch einen Benutzer z.B. mittels eines Joysticks oder auch automatisch erfolgen kann, wenn die Vorrichtung mit entsprechender Sensorik versehen bzw. entsprechend programmiert ist.

Sowohl die Anzahl von Trägern 13 an der Basis 11 als auch die Anzahl von Saugnäpfen 15a, 15b pro Träger 13 kann grundsätzlich beliebig variiert werden, wobei eine regelmäßige Matrixanordnung von Trägern 13 an der Basis 11 und von Saugnäpfen 15a, 15b an den einzelnen Trägern 13 von besonderem Vorteil ist. Durch einen synchronen Betrieb der Träger 13 kann eine sichere und zuverlässige Fortbewegung der Vorrichtung erreicht werden, wobei die relative Verdrehbarkeit der einzelnen Komponenten es insbesondere ermöglicht, von jeder beliebigen Momentanposition aus jede beliebige Richtung einzuschlagen.

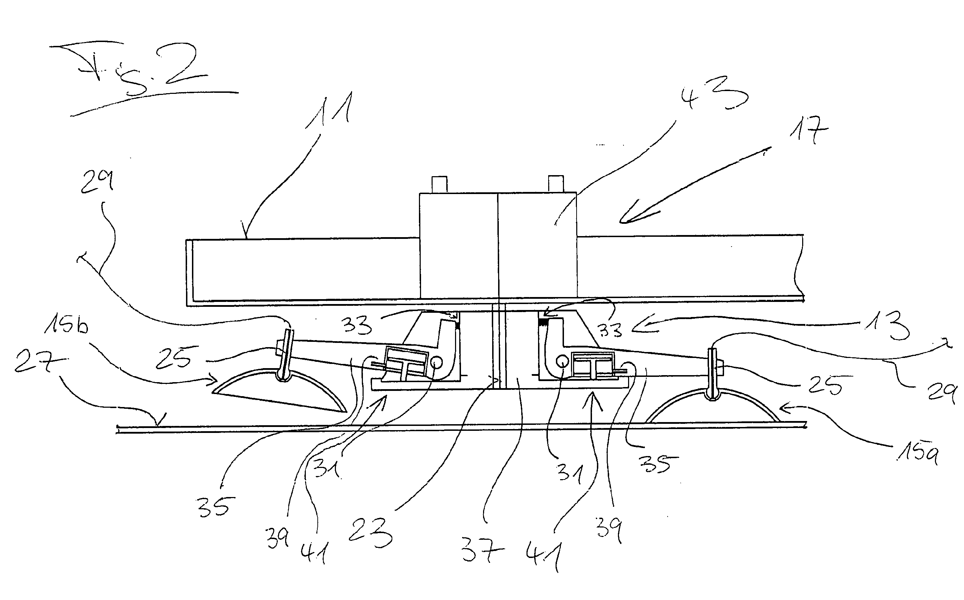

Fig. 2 zeigt in einer schematischen Seitenansicht einen Teil einer erfindungsgemäßen Reinigungsvorrichtung. Die mit einer nicht dargestellten Reinigungseinrichtung, beispielsweise einer rotierenden Bürste, versehene Basis 11 kann sich mittels eines Selbstlaufantriebs relativ zu einer zu reinigenden Fläche 27 bewegen.

Hierzu ist die Basis 11 mit einer Mehrzahl von Antriebseinheiten 17 versehen, die jeweils eine als Drehantrieb ausgebildete Antriebseinrichtung 43, einen tellerförmigen Träger 13 sowie mehrere Saugnapfeinrichtungen 15a, 15b umfasst, die an dem Träger 13 angebracht sind.

Mittels der Antriebseinrichtung 43 ist es möglich, eine Relativdrehung zwischen der Basis 11 und dem Träger 13 samt seiner Saugnapfeinrichtungen 15a, 15b zu bewirken, und zwar um eine Drehachse 23. Der Träger 13 umfasst eine mittels des Drehantriebs 43 antreibbare Basiseinheit 37, an der für jede Saugnapfeinrichtung 15a, 15b ein Hebel 35 um eine Schwenkachse 31 schwenkbar gelagert ist. Die Schwenkachsen 31 verlaufen jeweils senkrecht zur Drehachse 23.

An ihrem einen Ende tragen die Hebel 35 jeweils einen Saugnapf, der gegenüber dem Hebel 35 um eine Drehachse 25 frei verdrehbar ist. Die Drehachsen 25 verlaufen jeweils parallel zur Trägerdrehachse 23. Jeder Saugnapf 15a, 15b ist mit einer Vakuumleitung 29 verbunden, die an eine nicht dargestellte Vakuumquelle angeschlossen ist. Über diese Leitungen 29 können die Saugnapfeinrichtungen 15a, 15b gezielt evakuiert oder belüftet werden.

Zwischen den anderen Hebelarm der Hebel 35 und die Basiseinheit 37 des Trägers 13 ist jeweils eine Druckfeder 33 geschaltet, die danach strebt, den Hebel 35 derart zu verschwenken, dass der jeweilige Saugnapf abgesenkt ist.

Um die Saugnapfeinrichtungen 15a, 15b zwischen einer abgesenkten Stellung und einer angehobenen Stellung zu verschwenken, ist jeweils eine zwischen dem Hebel 35 und der Basiseinheit 37 wirksame Kolben-/Zylinderanordnung 41 vorgesehen. Ein Kolben dieser Anordnung 41 trennt einen Zylinder in zwei Kammern, von denen eine mittels einer Leitung 39 mit einem Fluid, insbesondere Druckluft, beaufschlagt werden kann. Wenn die in Fig. 2 untere Kammer mit Druckluft beaufschlagt wird, bewegt sich der am Hebel 35 angebrachte Zylinder samt Hebel 35 nach unten, da der Kolben fest mit der Basiseinheit 37 verbunden ist. Dies bewirkt ein Verschwenken des Hebels 35 um die Achse 31 derart, dass der betreffende Saugnapf abgesenkt wird. Zum Anheben des Saugnapfes wird der Hebel 35 in die entgegengesetzte Richtung verschwenkt. Hierzu wird die zuvor mit Druckluft beaufschlagte Kammer evakuiert.

Ein Aktivschalten einer Saugnapfeinrichtung 15a erfolgt also dadurch, dass zum einen durch Betätigen der Kolben-/Zylinderanordnung 41 der Hebel 35 entsprechend um die Achse 31 verschwenkt wird, wobei zum anderen der Saugnapf über die Leitung 29 evakuiert wird. Umgekehrt erfolgt ein Passivschalten einer Saugnapfeinrichtung 15b dadurch, dass der betreffende Saugnapf über die Leitung 29 belüftet und die betreffende Kolben-/Zylinderanordnung 41 derart betätigt wird, dass der Hebel 35 in die andere Richtung verschwenkt wird.

In einem möglichen Ausführungsbeispiel wird der Selbstlaufantrieb mittels einer gemeinsamen Antriebssteuerung derart betrieben, dass an jeder Antriebseinheit 17 eine Saugnapfeinrichtung 15a aktiv geschaltet wird, während alle anderen Saugnapfeinrichtungen 15b passiv geschaltet werden. Anschließend werden alle Antriebseinrichtungen 43 aktiviert, um eine relative Drehung zwischen der Basis 11 und den Trägern 13 zu veranlassen. Da die Basis 11 über wenigstens zwei aktiv geschaltete Saugnapfeinrichtungen 15a "festgehalten" wird, kann sich die Basis 11 relativ zur Fläche 27 nicht verdrehen. Möglich ist aber eine Drehung der Basis 11 relativ zu den Trägern 13, die sich ihrerseits um ihre jeweils aktiv geschaltete Saugnapfeinrichtung 15a drehen können.

Es resultiert eine Bewegung der Basis 11, wie es vorstehend z.B. in Verbindung mit Fig. 1 erläutert wurde.

Der Selbstlaufantrieb ist somit zu einem zyklischen Bewegungsablauf in der Lage, wobei jeder Zyklus einem Schritt einer Laufbewegung entspricht. In jedem Zyklus existiert somit ein Zustand, in welchem wenigstens zwei Saugnapfeinrichtungen, die zu unterschiedlichen Trägern gehören, gleichzeitig aktiv geschaltet sind. Da die Träger jeweils relativ zur Basis und zu ihren aktiv geschalteten Saugnapfeinrichtungen verdrehbar sind und die Basis selbst relativ zur Fläche, anders ausgedrückt also zu einer gedachten Verbindung zwischen den gleichzeitig aktiv geschalteten Saugnapfeinrichtungen, unverdrehbar ist, ergibt sich der geschilderte Bewegungsablauf der Gesamtvorrichtung.

Wie man Fig. 2 entnimmt, ist die Gesamtvorrichtung auch zu einer Bewegung in der Lage, bei welcher sich die Basis 11 relativ zur Fläche 27 verdreht. Hierzu kann beispielsweise bei einer einzigen Antriebseinheit 17 durch entsprechende Ansteuerung dafür gesorgt werden, dass wenigstens zwei Saugnapfeinrichtungen aktiv geschaltet werden, wobei alle anderen Antriebseinheiten derart angesteuert werden, dass alle Saugnapfeinrichtungen passiv geschaltet werden. Wenn es sich bei der Antriebseinheit mit den aktiv geschalteten Saugnapfeinrichtungen um eine im Bereich des Schwerpunkts der Gesamtvorrichtung angeordnete Antriebseinheit handelt, dann sorgt diese Antriebseinheit auch für eine ausreichende Abstützung der Basis derart, dass die Basis in bestimmungsgemäßer Weise zur Fläche 27 ausgerichtet bleibt. Anderenfalls könnten hinsichtlich des Bewegungsablaufs des Selbstlaufantriebs neutrale Abstützungen z.B. in Form von frei verdrehbaren Rollen oder Gleiter für die jeweils erforderliche Abstützung sorgen.

Durch Aktivieren des Drehantriebs 43 der die aktiv geschalteten Saugnapfeinrichtungen aufweisenden Antriebseinheit 17 kann dann ein Verdrehen der Basis 11 um den betreffenden Träger 13 und somit relativ zur Fläche 27 bewirkt werden, da der durch die wenigstens zwei aktiv geschalteten Saugnapfeinrichtungen an der Fläche 27 "festgehaltene" Träger sich nicht relativ zur Fläche 27 verdrehen kann.

Auf diese Weise kann - wie vorstehend bereits erwähnt - ein "Abbiegen", also ein Richtungswechsel, der Gesamtvorrichtung realisiert werden.

In einer möglichen Ausgestaltung der Vorrichtung können die Träger gleichzeitig als Reinigungseinrichtungen genutzt werden, d.h. es kann bei entsprechender konkreter Ausgestaltung der Vorrichtung der Umstand ausgenutzt werden, dass die Träger zumindest einen relevanten Teil der der zu reinigenden Fläche zugewandten Seite der Vorrichtung einnehmen und dass sich die Träger während der Fortbewegung relativ zueinander sowie relativ zu der Basis bewegen. Diese Bewegungen an der Unterseite der Vorrichtung können dazu genutzt werden, die Träger gleichzeitig als Reinigungsorgane zu verwenden, ohne dabei die Fortbewegungsfunktion mittels der Saugnapfeinrichtungen zu beeinträchtigen. So könnte beispielsweise jeder Träger in einem nach unten offenen, z.B. topfartigen Gehäuse angeordnet sein, dessen Rand als Bürste ausgebildet ist.

Hierbei ist es also nicht erforderlich, eine oder mehrere Seiten der Basis mit einer entsprechenden Ausrüstung z.B. in Form einer Bürste zu versehen oder bei der Steuerung der Fortbewegung der Vorrichtung dafür zu sorgen, dass die Vorrichtung stets korrekt orientiert ist.

Es ist möglich, aber nicht zwingend, dass jedem Träger eine eigene Antriebseinrichtung zugeordnet ist. Alternativ kann eine einzige Antriebseinrichtung vorgesehen sein, die mit den Trägern über geeignete Mittel, beispielsweise Zahnradanordnungen, gekoppelt ist, so dass alle Träger, insbesondere gleichzeitig, mittels einer gemeinsamen Antriebseinrichtung angetrieben und insbesondere in Drehung versetzt werden können. Ein synchroner Betrieb der Träger kann so ebenfalls auf einfache Weise realisiert werden.

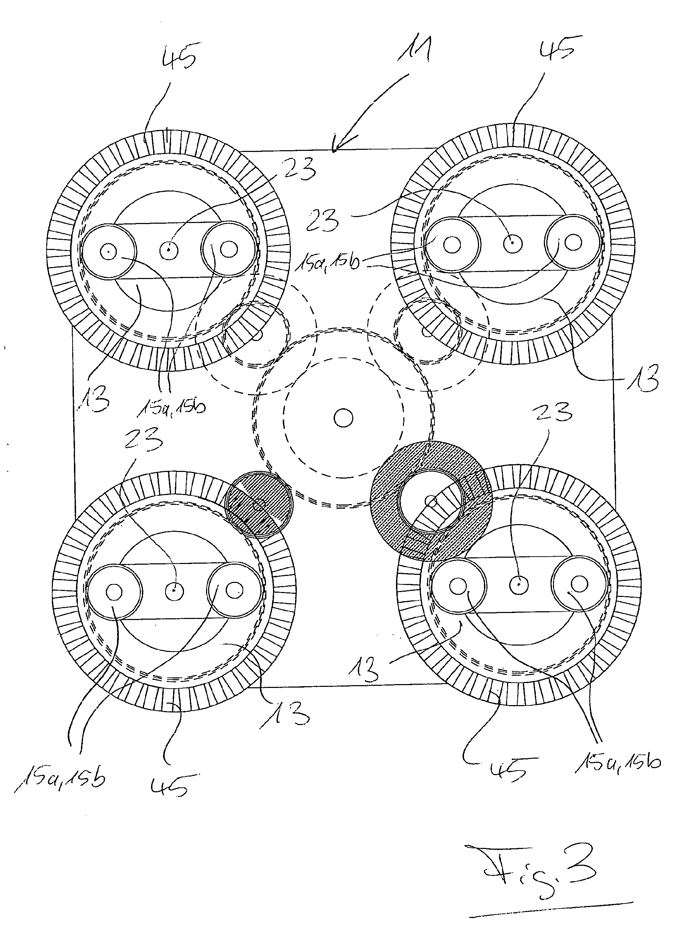

Ausführungsformen dieser Art zeigen die Fig. 3, 4 und 5.

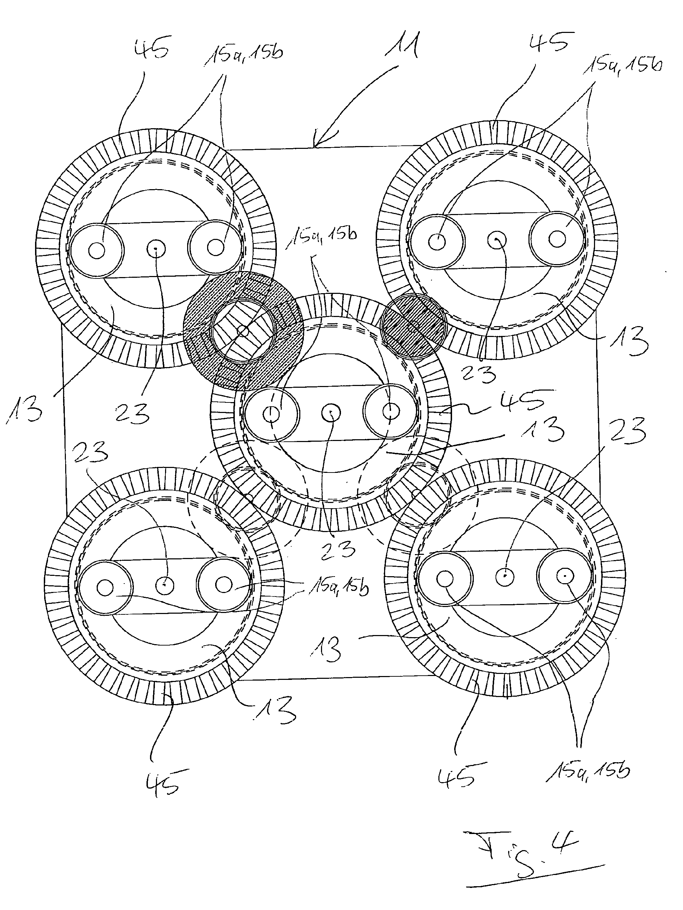

Die Vorrichtung gemäß Fig. 3 umfasst vier Träger 13 mit jeweils zwei Saugnapfeinrichtungen 15a, 15b, während Fig. 4 eine Ausführung mit fünf derartigen Trägern 13 umfasst, bei der die Basis 11 als Ganzes um den mittleren Träger 13 drehen kann.

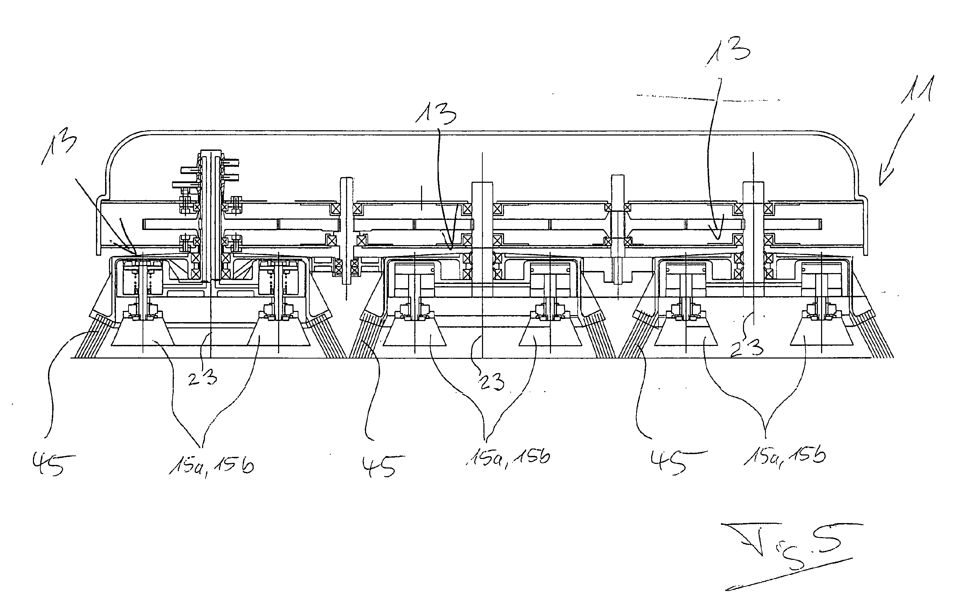

Jeder Träger 13 ist mit einem Bürstentopf 45 versehen, der das Aktivorgan, zu dem der Träger 13 und die Saugnapfeinrichtungen 15a, 15b gehören, über 360° umgibt und in dessen Inneren die Saugnapfeinrichtungen 15a, 15b angeordnet sind. Dies ist insbesondere der Fig. 5 zu entnehmen, die auch solche Details zeigt, die vorstehend bereits erläutert wurden, insbesondere im Zusammenhang mit Fig. 2.

Die Träger 13 sind jeweils durch Zahnräder miteinander gekoppelt, so dass lediglich ein einziger gemeinsamer Drehantrieb für alle Träger 13 der Basis 11 erforderlich ist.

Bezugszeichenliste
- 11: Basis
- 13: Träger, Teller
- 15a: momentan aktive Saugnapfeinrichtung
- 15b: momentan passive Saugnapfeinrichtung
- 17: Antriebseinheit
- 19: Bahn
- 21: resultierende Bewegungsrichtung
- 23: Drehachse
- 25: Drehachse
- 27: Fläche
- 29: Leitung
- 31: Schwenkachse
- 35: Hebel
- 37: Basiseinheit
- 39: Leitung
- 41: Kolben- /Zylinderanordnung
- 43: Antriebseinrichtung
- 45: Bürstentopf

## Patentansprüche

1. Vorrichtung zum Reinigen von insbesondere geneigten Flächen, insbesondere von Solar- oder Photovoltaikanlagenflächen auf Dächern von Gebäuden,
mit einer Basis (11), an der wenigstens eine Reinigungseinrichtung angebracht ist, und mit einem Selbstlaufantrieb für die Basis (11), wobei der Selbstlaufantrieb eine Mehrzahl von jeweils wahlweise aktiv oder passiv schaltbaren Saugnapfeinrichtungen (15a, 15b) umfasst.

2. Vorrichtung nach Anspruch 1,
**dadurch gekennzeichnet, dass**
der Selbstlaufantrieb derart ausgebildet ist, dass eine Laufbewegung der Basis (11) eine Drehbewegung um wenigstens eine im Aktivzustand befindliche Saugnapfeinrichtung (15a) umfasst.

3. Vorrichtung nach Anspruch 1 oder 2,
**dadurch gekennzeichnet, dass**
die Basis (11) wenigstens einen mit den Saugnapfeinrichtungen (15a, 15b) versehenen, insbesondere tellerartigen, Träger (13) aufweist, an dem die Basis (11) drehbar gelagert ist.

4. Vorrichtung nach Anspruch 3,
**dadurch gekennzeichnet, dass**
die Basis (11) eine Mehrzahl von jeweils mit Saugnapfeinrichtungen (15a, 15b) versehenen Trägern (13) aufweist, die für eine Laufbewegung der Basis (11) synchron betreibbar sind, wobei wenigstens zwei Träger (13) vorgesehen sind, die jeweils wenigstens zwei wahlweise aktiv oder passiv schaltbare Saugnapfeinrichtungen (15a, 15b) umfassen.

5. Vorrichtung nach Anspruch 3 oder 4,
**dadurch gekennzeichnet, dass**
die Saugnapfeinrichtungen (15a, 15b) jeweils am Träger (13) drehbar gelagert sind.

6. Vorrichtung nach einem der Ansprüche 3 bis 5,
**dadurch gekennzeichnet, dass**
die Basis (11) zentral und die Saugnapfeinrichtungen (15a, 15b) jeweils exzentrisch am Träger (13) drehbar gelagert sind.

7. Vorrichtung nach einem der Ansprüche 3 bis 6,
**dadurch gekennzeichnet, dass**
der Selbstlaufantrieb eine Antriebssteuerung umfasst, mit der zumindest eine Antriebseinheit (17) aus Träger (13) und Saugnapfeinrichtungen (15a, 15b) gemäß einem zyklischen Bewegungsablauf ansteuerbar ist, wobei jeder Zyklus die Schritte umfasst, dass wenigstens eine zuvor passive Saugnapfeinrichtung (15a) aktiv und jede andere Saugnapfeinrichtung (15b) passiv geschaltet wird, und
dass der Träger (13) über einen vorgegebenen Winkelbereich um die aktiv geschaltete Saugnapfeinrichtung (15a) herum gedreht wird.

8. Vorrichtung nach einem der Ansprüche 3 bis 7,
**dadurch gekennzeichnet, dass**
der Selbstlaufantrieb derart betreibbar ist, dass jeder Zyklus eines zyklischen Bewegungsablaufes einen Zustand umfasst, in welchem wenigstens zwei unterschiedlichen Trägern (13) zugeordnete Saugnapfeinrichtungen (15a, 15b) gleichzeitig aktiv geschaltet sind, wobei die Träger (13) jeweils relativ zur Basis (11) und zu der jeweiligen aktiv geschalteten Saugnapfeinrichtung (15a) verdrehbar sind und die Basis (11) relativ zu einer gedachten Verbindung zwischen den gleichzeitig aktiv geschalteten Saugnapfeinrichtungen (15a) unverdrehbar ist.

9. Vorrichtung nach einem der Ansprüche 3 bis 8,
**dadurch gekennzeichnet, dass**
wenigstens ein mit Saugnapfeinrichtungen (15a, 15b) versehener Träger (13) für eine Änderung der Laufrichtung der Basis (11) ausgebildet und ansteuerbar ist.

10. Vorrichtung nach einem der vorhergehenden Ansprüche,
**dadurch gekennzeichnet, dass**
der Selbstlaufantrieb zwischen den Saugnapfeinrichtungen (15a, 15b) und der Basis (11) wenigstens eine Antriebseinrichtung (43) zur Erzeugung einer Drehbewegung umfasst,
wobei bevorzugt die Antriebseinrichtung (43) wenigstens einen Elektromotor, insbesondere einen Schrittmotor oder einen Servomotor, oder einen Pneumatikzylinder umfasst.

11. Vorrichtung nach einem der Ansprüche 3 bis 10,
**dadurch gekennzeichnet, dass**
zwischen der Basis (11) und jedem Träger (13) und/oder zwischen Träger (13) und jeder Saugnapfeinrichtung (15a, 15b) eine Antriebseinrichtung (43) zur Erzeugung einer Drehbewegung wirksam ist.

12. Vorrichtung nach einem der Ansprüche 3 bis 11,
**dadurch gekennzeichnet, dass**
für eine Mehrzahl von Trägern (13), insbesondere für alle Träger (13), genau eine gemeinsame Antriebseinrichtung vorgesehen ist, wobei insbesondere die Antriebseinrichtung und die Träger (13) und/oder die Träger (13) untereinander durch Getriebe miteinander gekoppelt sind.

13. Vorrichtung nach einem der Ansprüche 3 bis 11,
**dadurch gekennzeichnet, dass**
für jeden Träger (13) genau eine Antriebseinrichtung (43) vorgesehen ist, mit welcher bei freier Verdrehbarkeit des Trägers (43) relativ zu einer aktiv geschalteten Saugnapfeinrichtung (15a) der Träger (43) und die Basis (11) relativ zueinander verdrehbar sind.

14. Vorrichtung nach einem der vorhergehenden Ansprüche,
**dadurch gekennzeichnet, dass**
die Saugnapfeinrichtungen (15a, 15b) jeweils zwischen einer angehobenen Stellung und einer abgesenkten Stellung bewegbar sind, wobei insbesondere jeweils ein Aktivschalten ein Absenken und Evakuieren und ein Passivschalten ein Belüften und Anheben der jeweiligen Saugnapfeinrichtung (15a, 15b) umfasst.

15. Vorrichtung zum Reinigen von insbesondere geneigten Flächen, insbesondere von Solar- oder Photovoltaikanlagenflächen auf Dächern von Gebäuden, insbesondere mit den Merkmalen eines oder mehrerer der vorstehenden Ansprüche,
mit einer Basis (11) und einem Selbstlaufantrieb für die Basis (11), wobei der Selbstlaufantrieb wenigstens ein Aktivorgan (13), insbesondere eine Mehrzahl von jeweils wahlweise aktiv oder passiv schaltbaren Saugnapfeinrichtungen (15a, 15b), umfasst, und wobei ein Reinigungsorgan (45) über 360° um das Aktivorgan (13) herum angeordnet ist, und/oder
wobei der Selbstlaufantrieb derart ausgebildet ist, dass die Basis (11) um 360° um eine kombinierte, antreibbare Reinigungs- und Bewegungseinheit drehbar ist, die ein Reinigungsorgan (45) und das Aktivorgan (13) umfasst.
